# EUROPEAN PATENT APPLICATION

(11) **EP 1 707 701 A1**
(43) Date of publication of application: **04.10.2006**
(21) Application number: 05381014.9
(22) Date of filing: 08.03.2005
(51) Int. Cl.: E04C 2/24, B32B 15/04, B32B 27/32

(54) **Supporting panel for construction**

(71) Applicant: Lloveras Calvo, Juan, 08182 San Feliu de Codinas (ES)
(72) Inventor: Lloveras Calvo, Juan, 08182 San Feliu de Codinas (ES)
(74) Representative: Esteban Perez-Serrano, Maria Isabel

(57) **Abstract**

The panel is symmetrical about its main central plane, from a central layer (1) of polystyrene that incorporates ducts (2) and is covered by two symmetrical supporting layers (3) of wood, covered in turn by corresponding glass wool layers (5) followed by thin outer aluminium plates (4), all of the layers being glued to one other, the assembly constituting a pressed panel with grooves that pass through one of the aluminium plates (4) as well as through the two supporting layers (3) and the central layer (4) until reaching the inner face of the other plate (4) and partially penetrating in it, allowing a noncontinuous ruled construction with the panel.

## Description

### OBJECT OF THE INVENTION

The present invention relates to a supporting panel for construction, from among panels intended for external or internal walls with a stratified construction.

The invention characterises a special construction of the panel with symmetrical layers about a central polystyrene layer, which is covered with layers of a supporting material, preferably wood, which are in turn covered by corresponding fire-resistant layers and additional aluminium layers, the seven layers glued to one another and pressed together.

### BACKGROUND OF THE INVENTION

The applicant holds patent no. 200402546 for a "Procedure for manufacturing non-flat structures with an external metallic surface and structure obtained therewith", for the gradual production of a layered plate that can be broken down into planes without live edges nor seam lines on its exposed face.

These structures are very useful as coatings, but if the layered panel must also be used as a supporting element the option of suitably thickening the aluminium on the exposed face is not competitive, so that it is necessary to implement a supporting element, preferably disposed near the aluminium plate.

The applicant is not aware of the existence of layered panels that solve the aforementioned drawback with the simplicity and effectiveness of the invention described below.

### DESCRIPTION OF THE INVENTION

The present invention relates to a supporting panel for construction, from among all panels for use as external or internal walls, as well as those made in layers.

This invention characterises a special construction of the panel, disposing a number of layers symmetrically about its main central plane made of polystyrene with a thickness and density suitable for the insulation properties required in each specific application, whether as an internal or eternal wall of a building.

Said polystyrene layer is covered at its two greater faces by corresponding layers of a supporting material, preferably wood with any finish, or alternatively by a plastic material with an equivalent mechanical strength.

These layers are in turn covered by corresponding layers of a fire-resistant material, such as glass fibre, and by aluminium end plates. The seven layers are glued to one another, preferably by a fast-action glue, and finally pressed together by a press or continuously.

Lastly, the innermost layer may, along its main central axis or any other parallel axes, incorporate wire ducts or at least continuous orifices for feeding said wires.

### DESCRIPION OF THE DRAWINGS

The present descriptive memory is completed by a set of drawings that illustrate the preferred example and not meant to limit the invention in any sense.

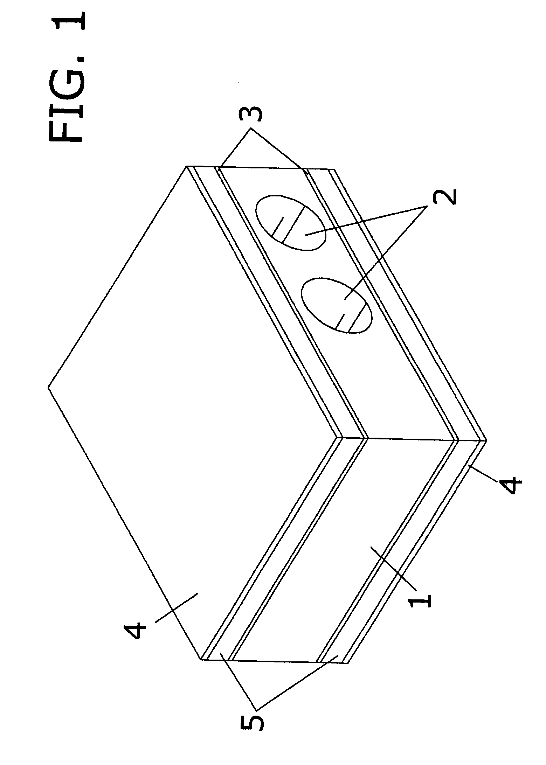

Figure 1 is a perspective view of a cross section of the panel showing two wire ducts in cross section.

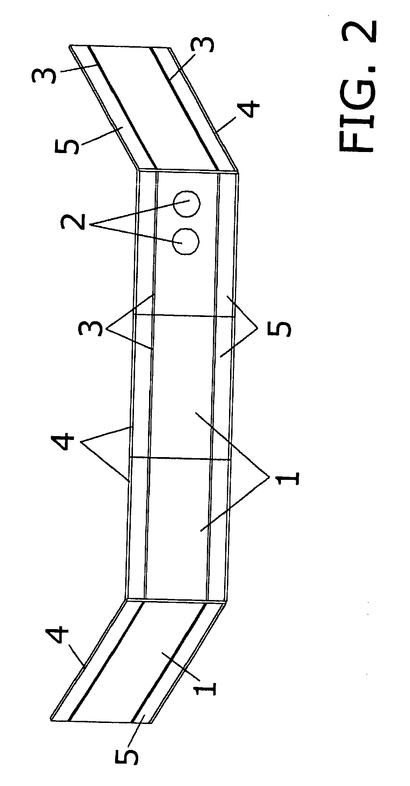

Figure 2 is a cross section of the panel with a non-continuous ruled construction.

### PREFERRED EMBODIMENT OF THE INVENTION

In view of the above, the present invention relates to a supporting panel for construction from among layered panels, essentially characterised by a symmetrical construction about its main central plane with respect to a central layer (1) made of polystyrene of medium density (from 20 to 40 kg/m3, as per EN1602), extruded or injected, which may or may not incorporate wire ducts (2) and which is covered by two symmetrical supporting layers (3) of wood, of either fibre with a suitable length agglutinated with resin, wood residue conglomerate or water-resistant board, all of these optionally fire-resistant.

Alternatively, any of said wood panels may be replaced by a plastic material with an equivalent mechanical strength, preferably melamine.

Said layers (3) are covered by corresponding fire-resistant layers (5) of glass wool or the like, followed by outer aluminium plates (4) with 0.05 to 2 mm. thickness, all of the layers being glued to each other by white adhesive with reactive polyurethane or two-component adhesive. Finally, the assembly is pressed in cold or warm by a press, or by rollers with a calender.

After the panel is obtained it is either used as is, or several grooves are made in each aluminium plate (4), the two supporting layers (3) and the central layer (1), passing the wire ducts (2), in general, until reaching the inner face of the other outer layer (4), either partially penetrating it or not, or a channel-like incision is made with a U-shape having wings equal or unequal to the core, or with a V-shape having symmetrical or asymmetrical sides, as well as also partially penetrating or not in inner face of the other plate (4), constituting with it a non-continuous ruled configuration determining external dihedrons as well as internal dihedrons with any angle, although preferably 20°, 30°, 42° and others, according to the application.

The essence of this invention is not affected by variations in the materials, shape, size and arrangement of its component elements, which are described in a non-limiting manner that should allow its reproduction by an expert in the field.

## Claims

1. Supporting panel for construction from among layered wall panels, essentially **characterised by** a symmetrical construction about its main central plane with respect to a central layer (1) made of polystyrene of medium density, extruded or injected, which incorporates wire ducts (2) or simple tubes and which is covered by two fire-resistant, symmetrical supporting layers (3) of wood, of either fibre with a suitable length agglutinated with resin, wood residue conglomerate or water-resistant board, covered in turn by corresponding fire-resistant layers (5) of glass wool or the like, followed by outer aluminium plates (4), all of the layers being glued to one other by white adhesive with reactive polyurethane or two-component adhesive, the assembly constituting a pressed panel having grooves that pass through one of the aluminium plates (4) as well as through the two supporting layers (3) and the central layer (1) until reaching the inner face of the other plate (4) and partially penetrating in it, allowing non-continuous ruled construction with the panel.

2. Supporting panel for construction, according to the previous claim, **characterised in that** the central polystyrene layer does not incorporate the ducts (2).

3. Supporting panel for construction, according to the previous claims, **characterised in that** the supporting layers (3), instead of wood, are made of a plastic material with an equivalent mechanical strength, preferably melamine.

4. Supporting panel for construction, according to the previous claims, **characterised in that** the outer aluminium plates (4) have a thickness ranging from 0.05 to 2 mm.

5. Supporting panel for construction, according to the previous claims, **characterised in that** the grooves do not reach the second outer plate (4) of the panel.

6. Supporting panel for construction, according to the previous claims, **characterised in that** the grooves are a channel-like U-shaped incision with the wings equal to the core.

7. Supporting panel for construction, according to the previous claims, **characterised in that** the U-shaped grooves have wings that are not equal to its core.

8. Supporting panel for construction, according to the above claims 1 to 5, **characterised in that** the grooves are V-shaped with symmetrical sides.

9. Supporting panel for construction, according to the above claim 8, **characterised in that** the grooves are V-shaped with asymmetrical sides.

10. Supporting panel for construction, according to the above claim 1, **characterised in that** the panel does not incorporate grooves.

11. Supporting panel for construction, according to the above claim 8, **characterised in that** the layers (5) of fire-resistant material are eliminated, as well as the fire-resistant treatment of any wooden layer (3).
